# EUROPÄISCHE PATENTSCHRIFT

(11) **EP 1 130 293 B1**
(45) Veröffentlichungstag und Bekanntmachung des Hinweises auf die Patenterteilung: **06.09.2006**
(21) Anmeldenummer: 01104345.2
(22) Anmeldetag: 23.02.2001
(51) Int. Cl.: F16H 61/30, F16H 61/28

(54) **Steuereinrichtung für automatisierte Schaltgetriebe von Fahrzeugen, vorzugsweise von Kraftfahrzeugen**
Control device for automated vehicle transmissions
Dispositif de commande pour boîtes de vitesses automatisées de véhicules

(30) Priorität: 29.02.2000 DE 10009505
(43) Veröffentlichungstag der Anmeldung: 05.09.2001
(73) Patentinhaber: HYDRAULIK-RING GMBH, 97828 Marktheidenfeld (DE)
(72) Erfinder: Meyer, Roland, 91154 Roth (DE); Claus, Thomas, 89081 Ulm (DE)

(56) Entgegenhaltungen:
- EP-A- 0 580 332
- EP-A- 0 592 170
- DE-A1- 4 311 868
- DE-A1- 19 606 756
- US-A- 5 749 264
- PATENT ABSTRACTS OF JAPAN Bd. 1998, Nr. 10, 31. August 1998 (1998-08-31) & JP 10 141499 A (ISUZU MOTORS LTD), 29. Mai 1998 (1998-05-29)

## Beschreibung

Die Erfindung betrifft eine Steuereinrichtung für automatisierte Schaltgetriebe von Fahrzeugen, vorzugsweise von Kraftfahrzeugen, nach dem Oberbegriff des Anspruches 1.

Bei Handschaltgetrieben ist es bekannt, mit einem nach oben in den Fahrgastraum ragenden Schalthebel die jeweiligen Gassen anzufahren und die Gänge einzulegen. Um ein solches Handschaltgetriebe zu automatisieren, sind Steuereinrichtungen mit Stelleinheiten bekannt, mit denen die Schaltwelle des Getriebes gedreht und verschoben werden kann.

Die JP 10-141499 A zeigt in ihren Figuren ein Automatikgetriebe mit mehreren hydraulischen Kolben, die reihig angeordnet mittels Kraftdifferenzen die horizontale Position eines Endes eines Gassenwahlhebels verändert.

In der DE 196 06 756 A1 ist eine frühere hausinterne Entwicklung zu einem automatisierten Handschaltgetriebe dargestellt, dessen Integrationsgrad an einigen Stellen noch geringer ist als in der vorliegenden Erfindung.

Die gattungsgemäße US 5 749 264 zeigt in Figur 2 eine pneumatisch getriebene Welle, die einen Steuerknüppel eines Schaltgetriebes schieb- und drehbeweglich durch die Einlenkung in Reihe angeordneter Kolben, einem seitlich angeordneten Kolben und einem Doppelkolben, bewegen können. Jede Bewegungstufe und Bewegungsrichtung wird in einem Abschnitt der Welle auf diese eingelenkt.

Die beiden EP-Anmeldungen EP 0 580 332 A1 und EP 0 592 170 A1 zeigen auf, dass eine Kraftübertragung über ein Gabelelement oder ein U-förmiges Element aus einem Schubelement in ein längsbewegliches Element erfolgen kann.

Der Erfindung liegt die Aufgabe zugrunde, die gattungsgemäße Steuereinrichtung so auszubilden, daß sie bei kompakter und preisgünstiger Ausbildung eine problemlose und einwandfreie Schaltung gewährleistet.

Diese Aufgabe wird bei der gattungsgemäßen Steuereinrichtung erfindungsgemäß mit den kennzeichnenden Merkmalen des Anspruches 1 gelöst.

Bei der erfindungsgemäßen Steuereinrichtung wird mit dem Kolben in Verbindung mit den Hilfskolben die Schaltwelle des Schaltgetriebes verschoben. Hierzu werden die Hilfskolben sowie die Kolbenstangen des Kolbens entsprechend beaufschlagt, vorzugsweise mit Hydraulikmedium. Durch die Verwendung von zwei Hilfskolben und zwei Kolbenstangen kann der Kolben in eine dem jeweiligen Schaltgetriebe entsprechende Lage verstellt werden. Die Stelleinheit kann zum Verschieben oder Drehen der Schaltwelle verwendet werden. Es ist auch möglich, beide Stelleinheiten mit einem derartigen Kolben mit Kolbenstangen und mit Hilfskolben zu versehen. Dann können für beide Stelleinheiten der erfindungsgemäßen Steuereinrichtung gleiche Einheiten eingesetzt werden.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1: in explosiver Darstellung eine erfindungsgemäße Steuereinrichtung,
- Fig. 2: einen Längsschnitt durch die erfindungsgemäße Steuereinrichtung mit einer ersten Stellung eines Schalthebels,
- Fig. 3 und Fig. 4: in Darstellungen entsprechend Fig. 2 weitere Stellungen des Schalthebels der Steuereinrichtung beim Einlegen von Gängen des automatisierten Schaltgetriebes,
- Fig. 5: im Schnitt einen Kupplungszylinder,
- Fig. 6: eine Stirnansicht des Kupplungszylinders gemäß Fig. 5,
- Fig. 7: in einer Darstellung entsprechend Fig. 5 eine zweite Ausführungsform eines Kupplungszylinders,
- Fig. 8: einen Schaltplan der erfindungsgemäßen Steuereinrichtung,
- Fig. 9: in einer Darstellung entsprechend Fig. 8 eine weitere Ausführungsform einer erfindungsgemäßen Steuereinrichtung,
- Fig. 10: unterschiedliche Stellungen einer zum Anfahren der Gassen des Schaltgetriebes vorgesehenen Verstelleinheit der erfindungsgemäßen Steuereinrichtung.

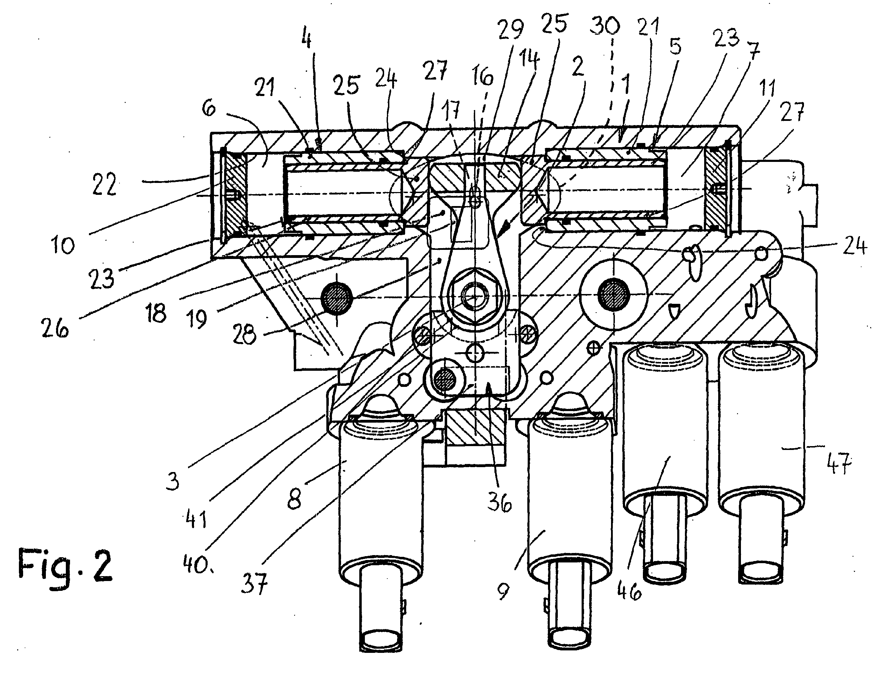

Die Steuereinrichtung ist für automatisierte Schaltgetriebe von Fahrzeugen, insbesondere von Kraftfahrzeugen, vorgesehen. Mit der Steuereinrichtung können die Gassen des Schaltgetriebes ausgewählt und in der ausgewählten Gasse die entsprechenden Gänge eingelegt werden. Die Steuereinrichtung hat ein Gehäuse 1 (Fig. 2), in dem ein Schalthebel 2 um eine Achse 3 schwenkbar untergebracht ist. Beiderseits des Schalthebels 2 liegen zwei Kolbeneinheiten 4, 5, mit denen der Schalthebel 2 in noch zu beschreibender Weise um die Achse 3 geschwenkt werden kann, um den jeweiligen Gang einzulegen. Die Kolbeneinheiten 4, 5 sind in zwei Zylinderräumen 6 und 7 abgedichtet verschiebbar gelagert, die im Gehäuse 1 vorgesehen sind. Die Zylinderräume 6, 7 werden mit Druckmedium, insbesondere Hydrauliköl, versorgt, das über zwei Schaltventile 8, 9 zugeführt wird. Die Schaltventile 8, 9 sind an das Gehäuse 1 angeschlossen. Die Zylinderräume 6, 7 sind an ihren voneinander abgewandten Enden durch jeweils eine Scheibe 10, 11 geschlossen.

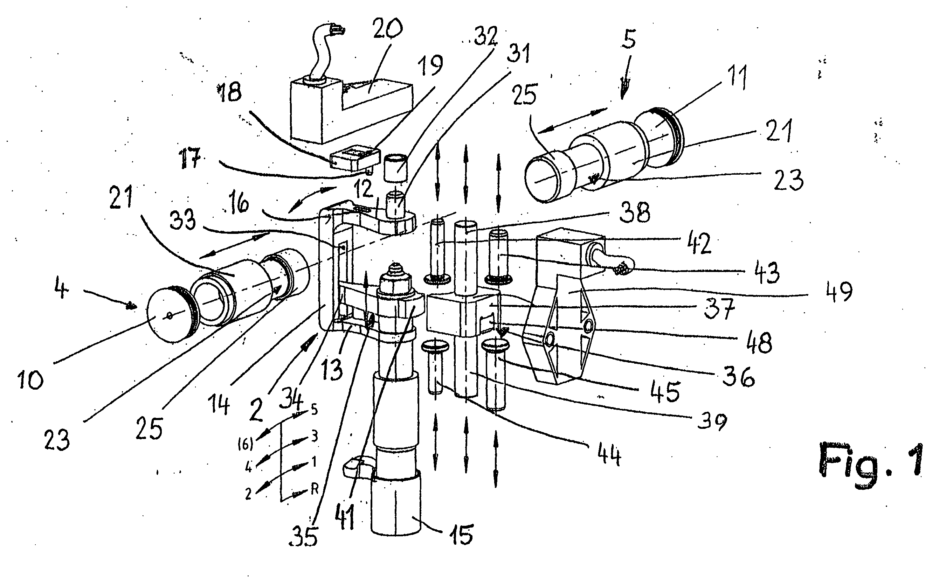

Wie Fig. 1 zeigt, ist der Schalthebel 2 U-förmig ausgebildet und hat zwei parallel zueinander liegende, senkrecht zur Schwenkachse 3 sich erstreckende Schenkel 12, 13, die durch einen Steg 14 miteinander verbunden sind. Vorteilhaft sind die Schenkel 12, 13 und der Steg 14 einstückig miteinander ausgebildet. Der in Fig. 1 untere Schenkel 13 sitzt drehbar auf einer Schaltwelle 15 des (nicht dargestellten) Schaltgetriebes. Wird der Schalthebel 2 mit den Kolbeneinheiten 4, 5 um die Achse 3 geschwenkt, wird dementsprechend die Schaltwelle 15, deren Achse mit der Schwenkachse 3 zusammenfällt, aufgrund des drehfest montierten Zwischenstücks 35 in entsprechendem Maße gedreht und so in der ausgewählten Gasse der gewünschte Gang eingelegt.

Der obere Schenkel 12 des Schalthebels 2 weist ein in seiner Längsrichtung vorzugsweise mittig sich erstreckendes Langloch 16 auf, in das ein Zapfen 17 eines Magnetträgers 18 eingreift. Er nimmt einen Magneten 19 auf, mit dem in Verbindung mit einem im Gehäuse 1 untergebrachten Sensor 20 die Schwenklage des Schalthebels 2 erfaßt werden kann. Das Langloch 16 gewährleistet, daß beim Schwenken der Schalthebel 2 und der Magnetträger 18 relativ zueinander bewegt werden können.

Die Kolbeneinheit 4 weist einen äußeren hülsenförmigen Kolben 21 auf, der abgedichtet an der Innenwand 22 des Zylinderraumes 6 geführt ist. Der äußere Kolben 21 sitzt auf einem inneren Kolben 23. Der äußere Kolben 21 ist zwischen der Schließscheibe 10 und einer radial nach innen gerichteten Schulterfläche 24 in der Innenwand 22 des Zylinderraumes 6 verschiebbar. Der innere Kolben 23 ragt in Richtung auf den Schalthebel 2 mit einem geschlossenen Kolbenkopf 25 über den äußeren Kolben 21. Der Außendurchmesser des Kolbenkopfes 25 ist größer als der Innendurchmesser des äußeren Kolbens 21, aber kleiner als dessen Außendurchmesser. Außerdem steht der Kolbenkopf 25 radial über einen den äußeren Kolben 21 axial führenden Hülsenteil 26 vor, so daß am Übergang vom Kolbenkopf 25 zum Hülsenteil 26 eine radial nach außen gerichtete, ringförmige Schulterfläche 27 gebildet wird. Der Schalthebel 2 liegt mit seinem Steg 14 am Kolbenkopf 25 des inneren Kolbens 23 an.

Die Kolbeneinheit 5 ist gleich ausgebildet wie die Kolbeneinheit 4, jedoch spiegelbildlich zu ihr angeordnet. Dementsprechend hat die Kolbeneinheit 5 den äußeren Kolben 21 und den inneren Kolben 23 mit dem Hülsenteil 26 und dem über den äußeren Kolben 21 in Richtung auf den Schalthebel 2 überstehenden Kolbenkopf 25, der am Steg 14 des Schalthebels 2 anliegt.

Der Schalthebel 2 liegt am Kolbenkopf 25 der inneren Kolben 23 der beiden Kolbeneinheiten 4, 5 an. Innerhalb des Gehäuses 1 ist der Schalthebel 2 in einem Aufnahmeraum 28 untergebracht. Auch der Magnetträger 18 mit dem Magneten 19 befindet sich in diesem Aufnahmeraum 28.

Fig. 2 zeigt den Schalthebel 2 in einer Mittelstellung, in der die beiden Kolbeneinheiten 4, 5 mit Druck beaufschlagt sind. Die äußeren Kolben 21 liegen an den Schulterflächen 24 des Gehäuses 1 unter dem Druck des Druckmediums an. Auch die beiden inneren Kolben 23 liegen unter dem Druck des Druckmediums mit ihren Kolbenköpfen 25 am Steg 14 des Schalthebels 2 an. Die Kolbenköpfe 25 liegen mit ihrer Mantelfläche an der Innenwand einer Bohrung 29 an, deren Durchmesser kleiner ist als der Durchmesser der gleich großen Zylinderräume 6, 7. Die Bohrung 29 ist so ausgebildet, daß der Steg 14 beim Schwenken des Schalthebels 2 nicht mit der Bohrungswandung in Berührung kommt. Die entsprechende Formgebung der Bohrung 29 ist in Fig. 2 durch die gestrichelte Linie 30 gekennzeichnet.

Wie Fig. 1 zeigt, ist am freien Ende des Schenkels 12 des Schalthebels 2 ein Zapfen 31 vorgesehen, auf dem ein Lager 32 angeordnet werden kann, mit welchem der Schalthebel 2 schwenkbar im Gehäuse 1 gelagert werden kann.

Der Steg 14 ist in halber Breite mit einer Vertiefung 33 versehen, die sich in Längsrichtung des Steges 14 erstreckt und in die das freie Ende 34 eines Schalthebels 35 eingreift. Er sitzt auf dem freien Ende der Schaltwelle 15, welche den Schenkel 13 des Schalthebels 2 durchsetzt. Der Schalthebel 35 sitzt drehfest auf der Schaltwelle 15 und kann längs der Vertiefung 33 in Achsrichtung der Schaltwelle 15 verschoben werden. Hierbei nimmt der Schalthebel 35 die Schaltwelle 15 in deren Achsrichtung mit. Auf diese Weise werden die verschiedenen Gassen des Schaltgetriebes angefahren.

Um den zwischen den beiden Schenkeln 12, 13 des Schalthebels 2 liegenden Schalthebel 35 längs der Vertiefung 33 zu verschieben, ist er mit einem Kolben 36 in Achsrichtung der Schaltwelle 15 fest verbunden. Der Kolben 36 hat einen blockförmigen Grundkörper 37, von dessen beiden einander gegenüberliegenden Seiten mittig Kolbenstangen 38, 39 abstehen, die fluchtend zueinander liegen. In der Einbaulage liegen die Kolbenstangen 38, 39 parallel zum Steg 14 des Schalthebels 2. Der Grundkörper 37 ist in Achsrichtung der Schaltwelle 15 fest mit dem Schalthebel 35 verbunden. Da der zum Einlegen der Gänge vorgesehene Schalthebel 2 mittels der Kolbeneinheiten 4, 5 um die Achse 3 geschwenkt wird, wird auch der in die Vertiefung 33 eingreifende Schalthebel 35 für die Gassenwahl entsprechend geschwenkt. Aus diesem Grunde ist die Verbindung zwischen dem Schalthebel 35 und dem Kolben 36 so gestaltet, daß der Schalthebel 35 relativ zum Kolben 36 um die Achse 3 schwenken kann. Die dem Schalthebel 35 zugewandte Stirnseite 40 des Grundkörpers 37 (Fig. 2) ist konvex gekrümmt und an die Stirnseite 41 des Schalthebels 35 angepaßt. Der Kolben 36 wird durch vier Hilfskolben 42 bis 45 betätigt, die paarweise an den die Kolbenstangen 38, 39 aufweisenden Seiten des Grundkörpers 37 angreifen. Zur Betätigung dieser Hilfskolben 42 bis 45 sind zwei Schaltventile 46, 47 vorgesehen, die am Gehäuse 1 der Steuereinrichtung angeordnet sind.

Im Grundkörper 37 des Kolbens 36 ist ein Magnet 48 untergebracht, dem ein Sensor 49 zugeordnet ist. Mit ihm kann die Lage des Kolbens 36 erfaßt und ausgewertet werden. Der Grundkörper 37 des Kolbens 36 besteht ebenso wie der Magnetträger 18 aus unmagnetischem Material. Mit den Hilfskolben 42 bis 45 kann der Kolben 36 in Achsrichtung der Schaltwelle 15 verschoben werden, um die jeweilige Gasse des Schaltgetriebes auszuwählen. Da der Kolben 36 mit dem Schalthebel 35 verbunden ist, wird beim Verschieben des Kolbens 36 der Schalthebel 35 zusammen mit der Schaltwelle 15 gegenüber dem Schalthebel 2 verschoben.

Auf der Schaltwelle 15 sitzt unterhalb der Steuereinrichtung eine (nicht dargestellte) Dichtung, vorzugsweise eine Radialwellendichtung, welche die einzige dynamisch beanspruchte Dichtung darstellt. Sie ist im Getriebegehäuse untergebracht, so daß Leckageöl nicht an die Umgebung gelangen kann.

Der Schalthebel 2 mit den Kolbeneinheiten 4, 5 und der Schalthebel 35 mit den Kolben 36 und 42 bis 45 sind auf kleinstem Raum im Gehäuse untergebracht, das dadurch kompakt ausgebildet ist.

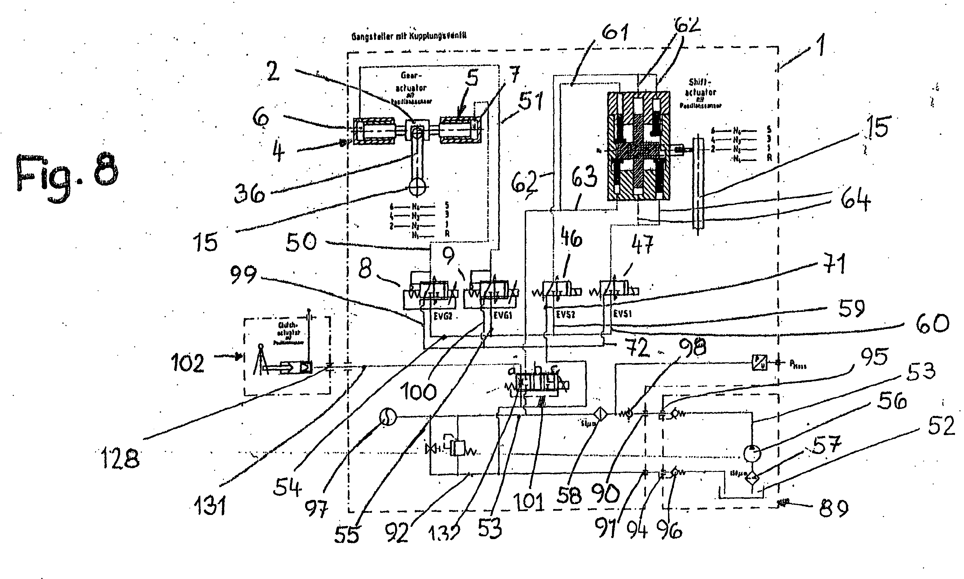

Die Ventile 8, 9 sind über jeweils eine Leitung 50, 51 (Fig. 8) mit den Zylinderräumen 6, 7 verbunden. Die Zuführung des Druckmediums von einem Tank 52 erfolgt über eine Druckleitung 53, über die das Druckmedium Leitungen 54 und 55 zugeführt wird. Das Druckmedium wird mit einer Pumpe 56 gefördert. In der Druckleitung 53 liegen zwei Filter 57, 58, die Verschmutzungen im Druckmedium zurückhalten.

In Fig. 8 ist der Schalthebel 2 in einer Neutralstellung dargestellt, in welcher die inneren Kolben 23 der Kolbeneinheiten 4, 5 am Schalthebel 2 anliegen. Diese Stellung des Schalthebels 2 entspricht der in Fig. 2 dargestellten Lage. Die beiden inneren Kolben 23 liegen mit ihren Kolbenköpfen 25 am Schalthebel an, während die äußeren Kolben 21 unter der Kraft des Druckmediums an den Schulterflächen 24 des Gehäuses 1 anliegen. Um die Kolbeneinheiten 4, 5 mit Druck zu beaufschlagen, werden die beiden Ventile 8, 9 aus der in Fig. 8 dargestellten Stellung so umgeschaltet, daß das Druckmedium über die Leitungen 50, 51 in die Zylinderräume 6, 7 gelangt. In dieser Stellung des Schalthebels 2 wird die Neutralstellung N₁ bis N₄ des Getriebes in jeder Gasse angefahren. In Fig. 8 ist das Schaltschema des Getriebes dargestellt, das sechs Vorwärtsgänge sowie einen Rückwärtsgang R aufweist.

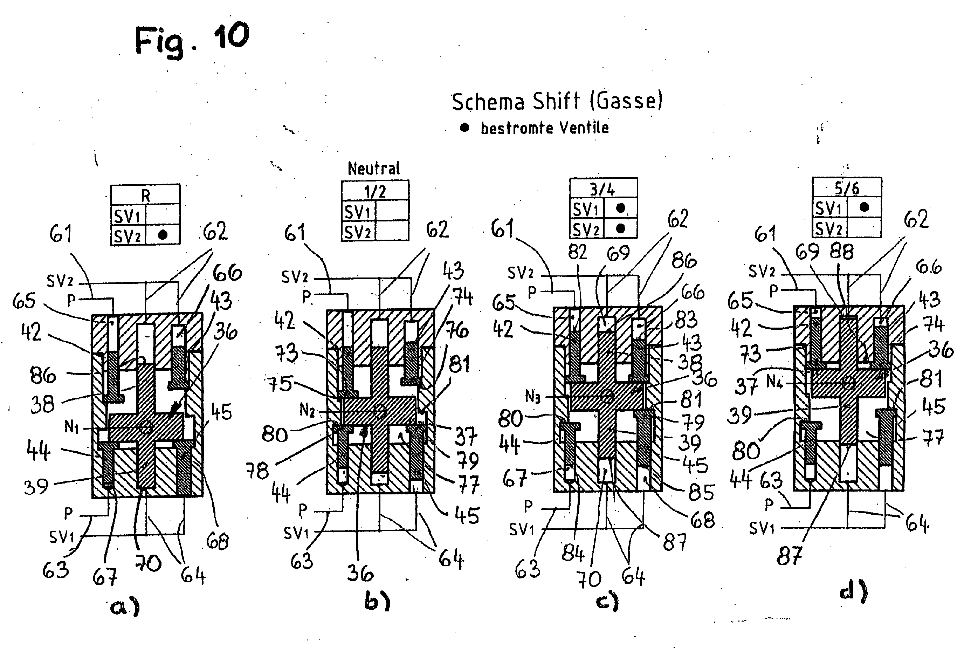

Um die jeweilige Gasse anzufahren, wird der Kolben 36 mit den Hilfskolben 42 bis 45 über die beiden Ventile 46, 47 mit Druckmedium beaufschlagt. Die Schaltventile 46, 47 sind über Leitungen 59, 60 mit der Druckleitung 53 verbunden. Die Verbindung von den Ventilen 46, 47 zu den Kolben 36, 42 bis 45 erfolgt über Leitungen 61, 62 und 63, 64. Die Anordnung und Ansteuerung der Kolben 36 und 42 bis 45 soll anhand von Fig. 10 näher erläutert werden. Die Hilfskolben 42 bis 45 sind in Druckräumen 65 bis 68 des Gehäuses 1 untergebracht. Die Kolbenstangen 38, 39 des Kolbens 36 liegen in Druckräumen 69 und 70. In die Druckräume 65, 66 münden die Leitungen 61 und 62. In die Druckräume 67 und 68 münden die Leitungen 63 und 64. Die Kolbenstangen 38, 39 des Kolbens 36 liegen zwischen jeweils zwei Hilfskolben 42, 43 und 44, 45. In die Druckräume 69, 70 der Kolbenstangen 38, 39 mündet jeweils eine Leitung 62, 64.

Beim Schaltvorgang wird zunächst eine der Gassen N₁ bis N₄ ausgewählt, in welcher der zu schaltende Gang liegt. Hierzu muß die Schaltwelle 15 in ihrer Achsrichtung verschoben werden, wozu der Kolben 36 gegenüber dem Schalthebel 2 verschoben wird. Da der Kolben 36 in Achsrichtung der Schaltwelle 15 fest mit dem Schalthebel 35 verbunden ist, wird dieser mit seinem freien Ende 34 längs der Vertiefung 33 im Steg 14 des Schalthebels 2 verschoben. Anstelle der Vertiefung 33 kann der Steg 14 des Schalthebels 2 auch mit einem entsprechenden Durchbruch versehen sein. Während des Verschiebens des Kolbens 36 ist der Schalthebel 2 in Ruhe.

Um die Schaltwelle 15 in die Neutralstellung **N**_{**2**} zu verstellen (Fig. 10b), sind beide Schaltventile 46, 47 unbestromt. Die entsprechende Schaltstellung der Ventile 46, 47 ist in Fig. 8 dargestellt. Der Durchgang von der Leitung 59, 60 zu den Leitungen 62, 64 ist unterbrochen. Die Leitungen 61 und 63 stehen unter Druck, da ein Kupplungsventil 101 seine Schließstellung a einnimmt. Die beiden Hilfskolben 42, 43 liegen mit ihren stirnseitigen verbreiterten Kolbenköpfen 73, 74 an Schulterflächen 75, 76 an, die an der Innenwandung eines den Grundkörper 37 des Kolbens 36 enthaltenden Aufnahmeraumes 77 vorgesehen sind. Die Schulterfläche 75 ist gegenüber der Schulterfläche 76 in Verschieberichtung der Hilfskolben 42, 43 versetzt angeordnet. Die Hilfskolben 44, 45 liegen mit ihren stirnseitigen, scheibenförmigen Kolbenköpfen 78, 79 am Grundkörper 37 des Kolbens 36 an. Der Hilfskolben 44 liegt außerdem an einer Schulterfläche 80 im Aufnahmeraum 77 an. Dem Hilfskolben 45 ist ebenfalls eine Schulterfläche 81 zugeordnet, die an der Innenwandung des Aufnahmeraumes 77 vorgesehen ist. Diese Schulterfläche 81 ist in bezug auf die Schulterfläche 80 in Hubrichtung der Hilfskolben versetzt angeordnet. Der in Hubrichtung gemessene Abstand zwischen den Schulterflächen 80, 81 sowie 75, 76 ist kleiner als die Dicke des Grundkörpers 37 des Kolbens 36. Darum hat der Hilfskolben 45 Abstand von der Schulterfläche 81, während der Hilfskolben 44 mit seinem Kolbenkopf 78 an der Schulterfläche 80 sowie an der Unterseite des Grundkörpers 37 des Kolbens 36 anliegt.

Die Kolbenköpfe 73, 74; 78, 79 haben jeweils gleiche Kolbenflächen. Die Schulterflächen 80, 81 haben eine größere Fläche als die jeweils in Hubrichtung der Hilfskolben gegenüberliegenden Schulterflächen 75, 76. Dementsprechend sind auch die in Hubrichtung einander gegenüberliegenden Hilfskolben 42, 44 und 43, 45 quer zu ihrer Achsrichtung versetzt zueinander angeordnet. Die den kleineren Schulterflächen 75, 76 zugeordneten Hilfskolben 42, 43 stehen darum mit einer größeren Fläche ihrer Kolbenköpfe 73, 74 in den Aufnahmeraum 77 vor als die gegenüberliegenden Hilfskolben 44, 45, deren Kolbenköpfe 78, 79 durch die größeren Schulterflächen 80, 81 um ein größeres Maß in der Anlagestellung abgedeckt werden.

Nimmt die Schaltwelle 15 ihre Neutralstellung ein, in der die Schaltventile 46, 47 nicht bestromt sind (Fig. 8 und 10b), kann durch Beaufschlagen der Kolbeneinheiten 4, 5 der Schalthebel 2 um die Achse 3 in der gewünschten Richtung geschwenkt werden, um in der Gasse N₂ den ersten oder zweiten Gang einzulegen. Bei der Darstellung gemäß Fig. 8 wird der Schalthebel 2 zum Einlegen des ersten Ganges in der Gasse **N**_{**2**} im Uhrzeigersinn und zum Einlegen des zweiten Ganges entgegen dem Uhrzeigersinn geschwenkt.

Soll die Gasse N₃ angefahren werden, in welcher der dritte und vierte Gang liegen, werden die beiden Schaltventile 46, 47 bestromt. Über die Leitungen 62 kann das Druckmedium in die Druckräume 66, 69, 68, 70 strömen (Fig. 10c). Die Hilfskolben 42, 44 stehen weiterhin über die Leitungen 61, 63 unter Druck. Die dem Druckmedium zugewandten Stirnseiten der Hilfskolben 42 bis 45 und der Kolbenstangen 38, 39 sind unterschiedlich. Die Stirnseiten 82, 84 der Hilfskolben 42, 44 haben die kleinste Fläche. Die Stirnseiten 86, 87 der Kolbenstangen 38, 39 des Kolbens 36 haben die größte Fläche, während die Stirnseiten 83, 85 der Hilfskolben 43, 45 eine dazwischen liegende Flächengröße haben. Da ausgehend von der Stellung gemäß Fig. 10b der Hilfskolben 43 Abstand vom Grundkörper 37 des Kolbens 36 hat und an der Schulterfläche 76 anliegt, wird der Kolben 36 durch Beaufschlagung der Stirnseiten 85, 87 des Hilfskolbens 45 und der Kolbenstange 39 nach oben verschoben, da die Gesamtfläche der beaufschlagten Stirnseiten 85, 87 größer ist als die beaufschlagten Stirnseiten 82 und 86 des Hilfskolbens 42 und der Kolbenstange 38. Bei der Verschiebebewegung hebt der Kolben 36 vom Hilfskolben 44 ab, der unter dem Druck des Druckmediums an der Schulterfläche 80 anliegt. Sobald der Hilfskolben 45 mit seinem Kolbenkopf 79 zur Anlage an der Schulterfläche 81 kommt, bleibt der Kolben 36 stehen. Nunmehr kann durch Verschwenken des Schalthebels 2 in die eine oder andere Richtung der dritte oder vierte Gang eingelegt werden.

Um die Schaltwelle 15 aus der Neutralstellung N₃ in die Neutralstellung N₄ zu verschieben (Fig. 10d), wird das Ventil 46 nicht mehr bestromt, so daß nur noch das Ventil 47 bestromt wird. Dadurch werden die Kolbenstange 39 des Kolbens 36 und der Hilfskolben 45 mit Druckmedium beaufschlagt. Der Hilfskolben 44 steht weiterhin unter Systemdruck und liegt an der Schulterfläche 80 an. Auch der Hilfskolben 45 liegt unter dem Druck des Druckmediums an der Schulterfläche 81 an. Der Kolben 36 wird damit infolge der Beaufschlagung der Stirnfläche 87 seiner Kolbenstange 39 verschoben und nimmt hierbei die Hilfskolben 42, 43 mit. Das in den Druckräumen 65, 66, 69 befindliche Druckmedium wird zum Tank hin verdrängt. Sobald die Kolbenköpfe 73, 74 der Hilfskolben 42, 43 an der den Aufnahmeraum 77 begrenzenden Wandung 88 zur Anlage kommen, ist die Neutralstellung **N**_{**4**} erreicht. Der Kolben 36 nimmt über den Schalthebel 35 die Schaltwelle 15 mit. In der Neutralstellung **N**_{**4**} kann der Schalthebel 2 in der entsprechenden Richtung um die Achse 3 geschwenkt werden, um den fünften oder sechsten Gang einzulegen.

Um die Schaltwelle 15 aus der Neutralstellung **N**_{**4**} zurück in die Neutralstellung **N**_{**3**} zu verschieben, werden wiederum beide Schaltventile 46, 47 bestromt. Sie werden dadurch so umgeschaltet, daß das Druckmedium unter Druck über die Leitungen 62, 64 in die Druckräume 69, 66 sowie 68, 70 gelangt. Somit werden die Stirnflächen 82, 83 und 86 der Hilfskolben 42, 43 und der Kolbenstange 38 beaufschlagt. Da der Grundkörper 37 des Kolbens 36 in der Neutralstellung N₄ Abstand von den beiden Hilfskolben 44, 45 hat, wirkt dem nur der Druck entgegen, der auf die Stirnseite 87 der Kolbenstange 39 des Kolbens 36 wirkt. Dies hat zur Folge, daß der Kolben 36 zurück in die Stellung gemäß Fig. 10c verschoben wird. Dann besteht Kräftegleichgewicht, da der Hilfskolben 43 an der Schulter 76 zur Anlage kommt und der gegenüberliegende Hilfskolben 45 seinerseits an der Schulterfläche 81 anliegt.

Um die Schaltwelle 15 aus der Neutralstellung N₃ in die Neutralstellung N₂ zurückzufahren, wird die Bestromung der beiden Schaltventile 46, 47 abgeschaltet. Dann wirkt nur noch auf die Hilfskolben 42, 44 das Druckmedium. Da in der Neutralstellung N₃ der Grundkörper 37 des Kolbens 36 noch Abstand vom Hilfskolben 44 hat, wird er durch den Hilfskolben 42 so weit nach unten verschoben, bis er an der Schulterfläche 75 zur Anlage kommt. Hierbei nimmt er den Hilfskolben 45 mit, so daß er von der Schulterfläche 81 abhebt.

Aus der Stellung N₂ kann die Schaltwelle 15 schließlich in die Stellung N₁ verschoben werden. Hierzu wird das Schaltventil 47 bestromt, so daß über die Leitungen 62 das Druckmedium den Hilfskolben 43 und die Kolbenstange 38 des Kolbens 36 beaufschlagt. Da der Hilfskolben 43 an der Schulterfläche 76 anliegt, wirkt sich die Druckbeaufschlagung des Hilfskolbens 43 auf den Kolben 36 nicht aus. Er wird somit infolge der Beaufschlagung der Stirnseite 86 der Kolbenstange 38 nach unten bewegt, wobei er die Hilfskolben 44, 45 mitnimmt. Die Stellung N₁ ist erreicht, wenn die Kolbenstange 39 am Boden des Druckraumes 70 anliegt bzw. die Kolbenköpfe 78, 79 der Hilfskolben 44, 45 an der den Aufnahmeraum begrenzenden Wandung zur Anlage kommen. Nunmehr kann in dieser Gasse der Rückwärtsgang R durch entsprechendes Verschwenken des Schalthebels 2 eingelegt werden. Beim Verschieben der Hilfskolben 44, 45 sowie der Kolbenstange 39 des Kolbens 36 wird das in den Druckräumen 67, 68, 70 befindliche Druckmedium zum Tank 52 hin verdrängt.

Der Tank 52 mit der Pumpe 56 ist in einer Zusatzeinheit 89 (Fig. 8) untergebracht, die an das Gehäuse 1 der Steuereinrichtung angeschlossen werden kann. Das Gehäuse 1 hat hierzu entsprechende Anschlüsse 90, 91, in welche die Druckleitung 53 sowie die Rückführleitung 92 münden. Die Zusatzeinheit 89 hat zwei Gegenanschlüsse 93, 94, die durch Rückschlagventile 95, 96 abgesichert sind. Sie verhindern, daß das im Tank 52 befindliche Druckmedium aus der Zusatzeinheit 89 austreten kann, wenn sie noch nicht an das Gehäuse 1 angeschlossen ist. Sobald die Zusatzeinheit 89 mit ihren Gegenanschlüssen 93, 94 an die Anschlüsse 90, 91 des Gehäuses 1 angeschlossen wird, werden bei diesem Steckvorgang zwangsläufig die Rückschlagventile 95, 96 geöffnet, so daß die Druckleitung 53 sowie die Rückführleitung 92 in der Zusatzeinheit 89 mit der Druckleitung 53 und der Rückführleitung 92 im Gehäuse 1 leitungsverbunden werden.

Die Druckleitung 53 ist mit einem Speicher 97 für das Druckmedium verbunden, der im Gehäuse 1 vorgesehen ist. Der Speicher 97 ist durch ein Rückschlagventil 98 abgesichert, so daß das im Speicher befindliche Druckmedium nicht über den Anschluß 90 nach außen treten kann, wenn die Zusatzeinheit 89 nicht angeschlossen ist. Die Anordnung des Speichers 97 im Gehäuse 1 verleiht der Steuereinrichtung auch Notlaufeigenschaften. Sollte ein Leitungsbruch auftreten, können mit dem im Speicher 97 befindlichen Druckmedium noch einige Schaltungen im Getriebe vorgenommen werden.

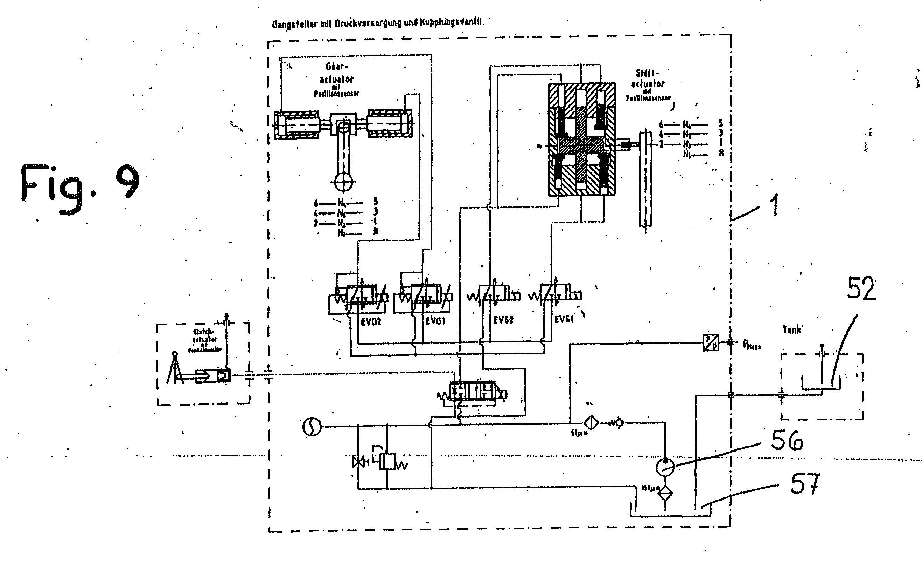

Fig. 9 zeigt die Möglichkeit, den Tank 52 mit der Pumpe 56 in das Gehäuse 1 der Steuereinrichtung zu integrieren. Dies hat den Vorteil, daß keine nach außen führende Druckleitung vorhanden ist, so daß bei einem eventuellen Leitungsbruch der Austritt von Druckmedium aus dem Gehäuse 1 zuverlässig vermieden ist.

In Fig. 9 ist durch gestrichelte Linien angedeutet, daß der Tank 52 auch außerhalb des Gehäuses 1 angeordnet sein kann. In diesem Falle wird er als Zusatzeinheit mit dem Gehäuse 1 in geeigneter Weise verbunden.

Um den Hebel 2 in der jeweils ausgewählten Gasse des Schaltgetriebes zum Einlegen des gewünschten Ganges zu verschwenken, werden die beiden Kolbeneinheiten 4, 5 über die Schaltventile 8, 9 in entsprechendem Maße beaufschlagt.

Fig. 2 zeigt den Schwenkhebel 2 in der Mittelstellung. Die beiden inneren Kolben 23 liegen mit ihren Kolbenköpfen 25 am Schwenkhebel 2 an. Die äußeren Kolben 21 sind unter der Kraft des Druckmediums gegen den gehäuseseitigen Anschlag 24 gefahren, über den die äußeren Kolben 21 radial nach innen vorstehen. Die beiden Schaltventile 8, 9 sind bestromt, so daß das Druckmedium über die Druckleitungen 50, 51 in die Druckräume 6, 7 gelangt.

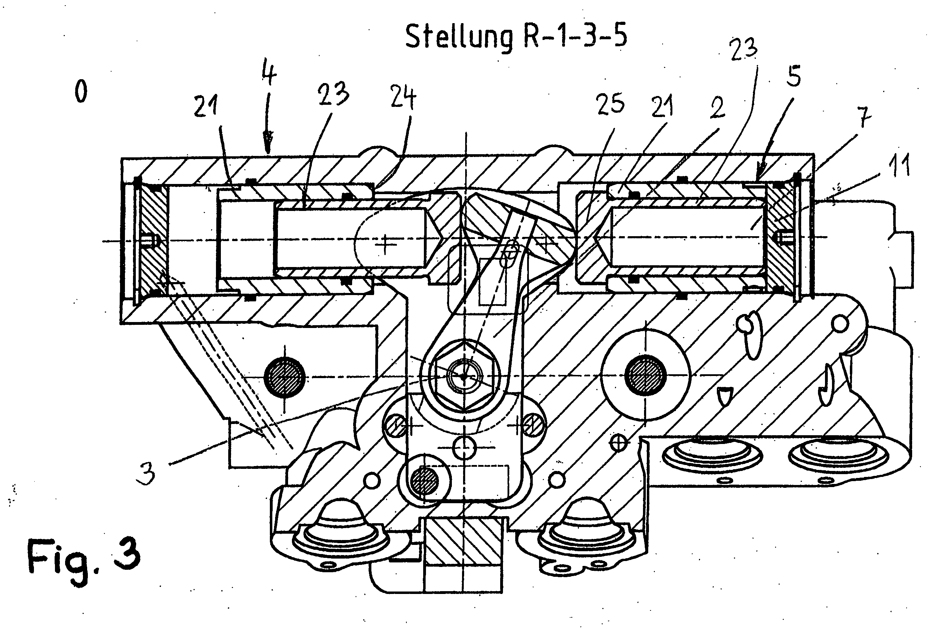

Damit je nach ausgewählter Gasse der Rückwärtsgang R sowie der erste, dritte und fünfte Gang des Schaltgetriebes eingelegt werden können, wird der Schalthebel 2 in die in Fig. 3 dargestellte Lage um die Achse 3 geschwenkt. Dies wird dadurch erreicht, daß das Schaltventil 8 nicht mehr bestromt wird. Dies hat zur Folge, daß der innere Kolben 23 der Kolbeneinheit 4 über den äußeren Kolben 21 in Richtung auf die Kolbeneinheit 5 ausgefahren wird. Der äußere Kolben 21 der Kolbeneinheit 4 stützt sich an der gehäuseseitigen Schulterfläche 24 ab, so daß er trotz Druckbeaufschlagung nicht weiter verschoben werden kann. Da das Schaltventil 8 nicht mehr bestromt wird, kann das im Druckraum 7 befindliche Druckmedium über die Leitung 50 über eine Tankleitung 99 (Fig. 8) zurück zum Tank 52 verdrängt werden. Der innere Kolben 23 der Kolbeneinheit 4 schwenkt den Schalthebel 2 in der Darstellung gemäß Fig. 3 im Uhrzeigersinn, wodurch der innere Kolben 23 der Kolbeneinheit 5 über den Kolbenkopf 25 zurückgeschoben wird. Da er den äußeren Kolben 21 stirnseitig übergreift, nimmt der innere Kolben 23 den äußeren Kolben 21 mit, bis beide Kolben 21, 23 an der Schließscheibe 11 zur Anlage kommen.

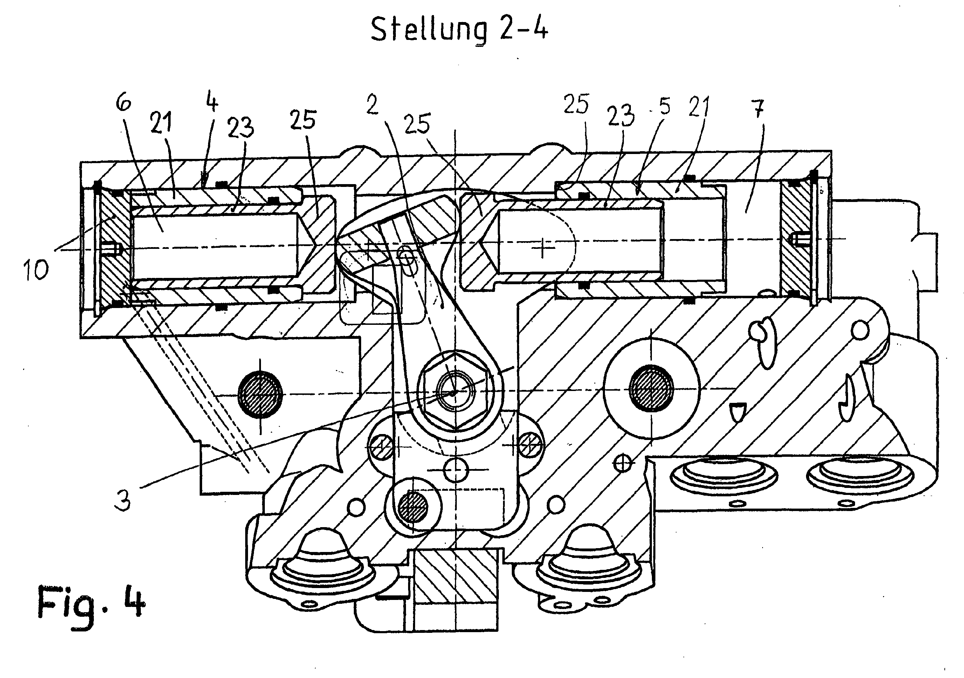

Fig. 4 zeigt die Lage des Schwenkhebels 2, um in der jeweils ausgewählten Gasse den zweiten, den vierten oder den sechsten Gang einzulegen. In diesem Falle wird das Schaltventil 8 bestromt, so daß das Druckmedium über die Leitung 50 in den Druckraum 7 strömen kann. Das andere Schaltventil 9 ist unbestromt, so daß der Druckraum 6 über die Leitung 51 und eine Tankleitung 100 mit dem Tank 52 verbunden ist. Somit wird durch Druckbeaufschlagung der Kolbeneinheit 5 der innere Kolben 23 ausgefahren, so daß sein Kolbenkopf 25 den Hebel 2 um die Achse 3 entgegen dem Uhrzeigersinn schwenkt. Der äußere Kolben 21 der Kolbeneinheit 5 liegt an der gehäuseseitigen Schulterfläche 25 an. Beim Schwenkvorgang verschiebt der Schalthebel 2 über den Kolbenkopf 25 den inneren Kolben 23 der Kolbeneinheit 4. Der Kolbenkopf 5 nimmt den äußeren Kolben 21 mit, bis beide Kolben 21, 23 an der Schließscheibe 10 anliegen.

Wenn das Schaltgetriebe nur fünf Gänge hat, dann wird mit dem Schalthebel 2 in der Stellung gemäß Fig. 4 nur der zweite oder vierte Gang in der ausgewählten Gasse eingelegt.

Um den jeweiligen Schaltvorgang durchzuführen, werden zunächst die Schaltventile 46, 47 in der beschriebenen Weise betätigt, um durch Längsverschieben der Schaltwelle 15 die jeweilige Gasse des Schaltgetriebes auszuwählen. Anschließend werden die beiden Schaltventile 8, 9 betätigt, um in der ausgewählten Gasse den gewünschten Gang einzulegen. Bei der Schwenkbewegung des Hebels 2 wird die Schaltwelle 15 über den in Drehrichtung formschlüssig mit ihr verbundenen Schalthebel 35 um ihre Achse gedreht. Der Schalthebel 35 wird hierbei gegenüber dem Kolben 36 geschwenkt, ohne daß die in Achsrichtung wirksame Formschlußverbindung zwischen dem Schalthebel 35 und dem Kolben 36 verloren geht.

Da der Schalthebel 2 und der Kolben 36 jeweils mit den Magneten 19 und 48 versehen sind, kann das von diesen Magneten ausgehende Magnetfeld durch den jeweiligen Sensor 20, 49 erfaßt werden, so daß einwandfrei festgestellt werden kann, welche Gasse des Schaltgetriebes angefahren und welcher Gang eingelegt ist.

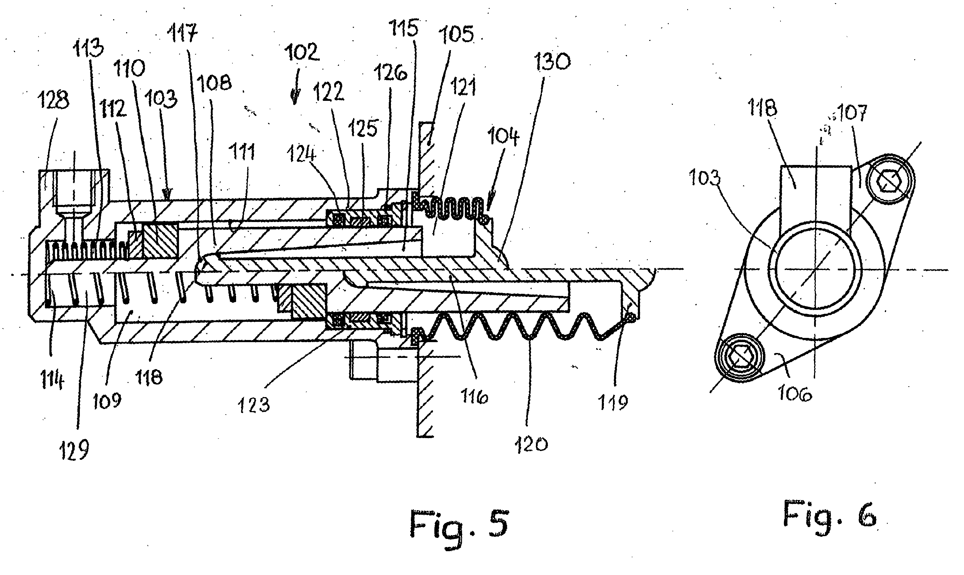

Die Steuereinrichtung weist noch die Besonderheit auf, daß in der Druckleitung 53 das Kupplungsventil 101 liegt (Fig. 8). Mit ihm kann in Abhängigkeit von den Schaltbewegungen eine Kupplung 102 betätigt werden. Wie Fig. 5 zeigt, hat die Kupplung 102 einen Zylinder 103, in dem ein als Kolben 104 ausgebildetes Betätigungselement verschiebbar gelagert ist. Das Zylindergehäuse 103 ist im dargestellten Ausführungsbeispiel an ein Getriebegehäuse 105 angeschlossen. Es ist auch möglich, das Zylindergehäuse 103 an einer gesonderten Halterung zu befestigen. Das Zylindergehäuse 103 hat vorteilhaft kreisförmigen Querschnitt (Fig. 6) und steht senkrecht von einer Wandung des Getriebegehäuses 105 ab. Am Zylindergehäuse 103 sind zwei quer abstehende Laschen 106, 107 vorgesehen (Fig. 6), die an die Seitenwand des Getriebegehäuses 105 angeschraubt werden. Das Zylindergehäuse 103 kann als Gußteil ausgebildet sein und aus Leichtmetall, vorteilhaft Aluminium, oder aus Kunststoff bestehen.

Der Kolben 104 hat ein äußeres nicht magnetisierbares Teil 108, das in einer Aufnahme 109 des Zylindergehäuses 103 angeordnet ist. Auf einem im Durchmesser verringerten Endabschnitt des Kolbenteiles 108 sitzt ein Ringmagnet 110 und eine nicht magnetisierbare Scheibe 112. An der Scheibe 112 liegt das eine Ende einer Schraubendruckfeder 113 an, die den Endabschnitt des Kolbenteiles 108 umgibt und sich mit ihrem anderen Ende am Boden 114 der Aufnahme 109 abstützt. Am Ringmagnet 110 kann das von diesem Magneten ausgehende Magnetfeld durch einen am Gehäuse angebrachten Sensor (im Bild nicht dargestellt) erfaßt werden, so daß einwandfrei festgestellt werden kann, in welchem Regelbereich (eingekuppelt/ausgekuppelt) sich die Kupplung 102 befindet.

Das Kolbenteil 108 hat eine konische Vertiefung 115, in der ein inneres Kolbenteil 116 untergebracht ist. Die Vertiefung 115 hat einen kalottenförmigen Boden 117, an dem das innere Kolbenteil 116 mit einem kalottenförmigen Endstück 118 anliegt. Das innere Kolbenteil 116 steht axial über das äußere Kolbenteil 108 vor und hat nahe seinem freien Ende einen radial nach außen gerichteten Ringflansch 119, an dem das eine Ende eines Faltbalges 120 befestigt ist. Das andere Ende des Balges 120 ist an der Stirnseite des Getriebegehäuses 105 befestigt. Der Balg 120 dient lediglich als Staubdichtung und umgibt den Kolben 104 innerhalb eines Aufnahmeraumes 121 des Getriebegehäuses 105.

Das Zylindergehäuse 103 weist benachbart zum Getriebegehäuse 105 an der Innenwandung 111 eine Vertiefung 122 auf, in der eine Buchse 123 untergebracht ist. In ihr sind innenseitig mit axialem Abstand hintereinander eine Ringdichtung 124, ein Führungsband 125 und ein ringförmiger Abstreifer 126 angeordnet. Mit der Ringdichtung 124 wird der Kolben 104 abgedichtet. In jeder Axiallage liegt die Ringdichtung 124 dichtend am Kolbenteil 108 an. Das ringförmige Führungsband 125, das rechteckförmigen Querschnitt hat, liegt ebenfalls auf dem Kolbenteil 108 auf und nimmt Querkräfte auf. Der Abstreifer 126, der benachbart zum Getriebegehäuse 105 angeordnet ist, verhindert, daß bei den Hubbewegungen des Kolbens 104 Schmutzteilchen in das Gehäuse 103 gelangen. Die Buchse 123 ist durch einen Sicherungsring 127 axial in der Vertiefung 122 gesichert und stellt somit den Führungsteil des gesamten Kolbens 104 dar. Eine teure mechanische Innenbearbeitung der Innenwandung 111 ist dadurch nicht notwendig.

Am freien Ende des Zylindergehäuses 103 ist ein radial sich erstrekkender Anschluß 128 vorgesehen, über den Druckmedium in noch zu beschreibender Weise zugeführt wird, um den Kolben 104 zur Betätigung der Kupplung 102 zu verschieben. Der Anschluß 128 mündet in einen Druckraum 129, der an einem Ende durch den Boden 114 des Gehäuses 103 und am anderen Ende durch den Ringmagnet 110 begrenzt ist.

Die obere Hälfte in Fig. 5 zeigt die Stellung des Kolbens 104, wenn die Kupplung 102 geschlossen ist. Die (nicht dargestellte) Druckplatte der Kupplung 102 drückt auf einen teilkalottenförmigen Vorsprung 130 am freien Ende des inneren Kolbenteiles 116 und verschiebt dadurch den Kolben 104 gegen die Kraft der Schraubendruckfeder 113 in das Zylindergehäuse 103. Die Federkraft der Druckplatte der Kupplung 102 ist deutlich größer als die von der Druckfeder 113 auf den Kolben 104 ausgeübte Gegenkraft. Soll die Kupplung 102 für den Gangwechsel betätigt werden, wird Druckmedium über den Anschluß 128 in den Druckraum 129 eingebracht und der Kolben 104 entsprechend druckbeaufschlagt. Die vom Druckmedium ausgeübte Kraft in Verbindung mit der Federkraft 113 reicht aus, die Federkraft der Druckplatte zu überwinden, so daß die Kupplung geöffnet ist und der Gangwechsel vorgenommen werden kann.

Die Druckfeder 113 dient zur Anlage der Scheibe 112 an den Ringmagnet 110. Außerdem sorgt die Druckfeder 113 dafür, daß der Kolben 104 mit dem Vorsprung 130 stets an der Druckplatte der Kupplung 102 anliegt. Rechts von der Scheibe 112 ist vorteilhaft eine Ringmagnetscheibe 110, deren Magnetfeld von einem (nicht dargestellten) Sensor erfaßt wird, so daß die Lage des Kolbens 104 einwandfrei erfaßt werden kann. Der Kolben 104, insbesondere sein äußeres Kolbenteil 108, können in einfacher Weise spitzenlos bearbeitet werden. Da sich die Vertiefung 115 in Richtung auf das freie Ende des Kolbenteiles 108 konisch erweitert und das innere Kolbenteil 116 über das teilkalottenförmige Endstück 18 am teilkalottenförmigen Boden 117 der Vertiefung 115 anliegt, kann das innere Kupplungsteil 116 geringfügig verschwenkt werden, ohne daß die Funktionsfähigkeit des Ventilkolbens 104 beeinträchtigt wird.

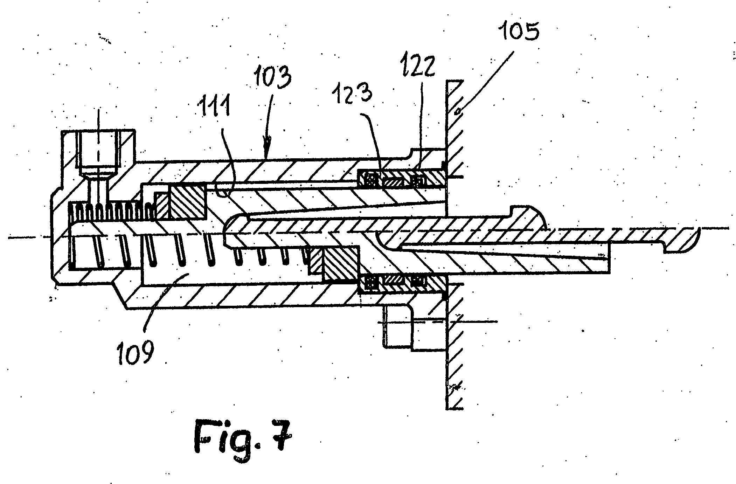

Fig. 7 zeigt das Zylindergehäuse 103, das im wesentlichen gleich ausgebildet ist wie die Ausführungsform gemäß den Fig. 5 und 6. Es fehlt lediglich der als Staubdichtung dienende Balg 120. Die in der Vertiefung 122 in der Innenwandung 111 des Zylindergehäuses 103 liegende Buchse 123 liegt mit ihrer einen Stirnseite an der Stirnseite des Getriebegehäuses 105 an. Dadurch kann der Sicherungsring 127 gemäß der vorigen Ausführungsform eingespart werden. Im übrigen ist diese Ausführungsform gleich ausgebildet wie das vorige Ausführungsbeispiel.

Die Kupplung 102 wird über das Kupplungsventil 101 betätigt (Fig. 8). Es hat drei Schaltstellungen a, b und c. Der Anschluß 128 des Zylindergehäuses 103 der Kupplung 102 ist über eine Druckleitung 131 mit dem Kupplungsventil 101 verbunden.

In der Schaltstellung a (Magnet unbestromt), die in Fig. 8 dargestellt ist, ist der Druckraum 129 über eine Drossel 132 mit der Rückführleitung 92 verbunden. Die Kupplung 102 ist gesperrt, so daß bei einer Netzschwankung (Spannung/Strom) die Kupplung nicht unverhofft schließen kann und ein plötzliches Fortbewegen des Fahrzeugs ausgeschlossen ist. Außerdem sind in der Steuereinrichtung alle Schaltvorgänge ausgeführt (Steuereinheit nicht druckbeaufschlagt).

Wird das Kupplungsventil 101 in die Schaltstellung b geschaltet, wird die Leitung 131 mit der zum Tank führenden Rückführleitung 92 verbunden, so daß der Kolben 104 durch die Druckplatte der Kupplung 102 zurückgeschoben und die Kupplung damit geschlossen wird. Das im Druckraum 129 des Zylindergehäuses 103 befindliche Druckmedium wird über die Leitung 131 zum Tank 52 hin verdrängt. Gleichzeitig wird in der Schaltstellung b die Verbindung von der Druckleitung 53 über das Kupplungsventil 101 zu den Druckleitungen 61, 63 ebenfalls wie in Schaltstellung c freigegeben, so daß das unter Druck stehende Druckmedium in den entsprechenden Druckräumen 65 bis 70 der Kolben 42 bis 45 bzw. 38, 39 (Fig. 10) wirken kann. Die Steuereinrichtung hält somit den unter Schaltstellung c eingelegt Gang während des Schließvorgangs der Kupplung.

In der Schaltstellung c (Magnet bestromt) werden die Kupplung 102 und die Steuereinrichtung freigegeben. Dadurch wird während des Kupplungsöffnungsvorgangs in der Steuereinrichtung in beschriebener Weise der Gang bzw. die Gasse gewählt.

## Patentansprüche

1. Steuereinrichtung für automatisierte Schaltgetriebe von Fahrzeugen, vorzugsweise von Kraftfahrzeugen, mit zwei Stelleinheiten (2, 4, 5, 36), mit denen eine Schaltwelle (15) des Schaltgetriebes zur Gassen- und Gangwahl drehbar und verschiebbar ist,
wobei die erste Stelleinheit zum Verschieben der Schaltwelle (15) einen Kolben (36) aufweist, wobei
dem Kolben (36) wenigstens zwei Hilfskolben (42 bis 45) zugeordnet sind, mit denen der Kolben (36) wahlweise in zwei Richtungen verschiebbar ist, und wobei der Kolben (36) zwei in Verschieberichtung sich erstreckende, von einem Grundkörper (37) an einander gegenüberliegenden Seiten abstehende Kolbenstangen (38, 39) aufweist, und **dadurch gekennzeichnet, dass**
der Kolben (36) relativ zu einem Stellelement (2), das U-förmig ausgebildet ist und zwei Schenkel (12, 13) hat, der zweiten Stelleinheit verschiebbar ist, mit dem die Schaltwelle (15) für die Gangwahl verstellbar ist, wobei einer der Schenkel (13) drehbar auf der Schaltwelle (15) sitzt.

2. Steuereinrichtung nach Anspruch 1,
**dadurch gekennzeichnet, dass** die Kolbenstangen (38, 39) mit Druckmedium beaufschlagbare Stirnflächen (86, 87) aufweisen, die eine andere Größe haben als die mit dem Druckmedium beaufschlagbaren Stirnflächen (82 bis 85) der Hilfskolben (42 bis 45).

3. Steuereinrichtung nach Anspruch 1 oder 2,
**dadurch gekennzeichnet, dass** der Grundkörper (37) des Kolbens (36) blockförmig ausgebildet ist.

4. Steuereinrichtung nach einem der Ansprüche 1 bis 3,
**dadurch gekennzeichnet, dass** den einander gegenüberliegenden Seiten des Grundkörpers (37) des Kolbens (36) jeweils zwei vorzugsweise beiderseits der Kolbenstangen (38, 39) liegende Hilfskolben (42 bis 45) zugeordnet sind.

5. Steuereinrichtung nach Anspruch 4,
**dadurch gekennzeichnet, dass** die Stirnseiten (82 bis 85) der beiden Hilfskolben (42, 45) auf jeder Seite des Grundkörpers (37) des Kolbens (36) kleiner sind als die Stirnflächen (86, 87) der Kolbenstangen (38, 39).

6. Steuereinrichtung nach Anspruch 4 oder 5,
**dadurch gekennzeichnet, dass** die beiden Hilfskolben (42 bis 45) auf jeder Seite des Grundkörpers (37) des Kolbens (36) unterschiedlich große Stirnflächen (82 bis 85) haben, und dass vorteilhaft die Hilfskolben (42, 44) mit der kleineren Stirnfläche (82, 84) einen größeren Verschiebeweg haben als die Hilfskolben (43, 45) mit der größeren Stirnfläche (83, 85).

7. Steuereinrichtung nach einem der Ansprüche 1 bis 6,
**dadurch gekennzeichnet, dass** den Hilfskolben (42 bis 45) Anschläge (75, 76, 80, 81) im Verschiebeweg zugeordnet sind.

8. Steuereinrichtung nach einem der Ansprüche 1 bis 7,
**dadurch gekennzeichnet, dass** die Hilfskolben (42 bis 45) und die Kolbenstangen (38, 39) aufnehmenden Druckräume (65 bis 70) an Schaltventile (46, 47) angeschlossen sind.

9. Steuereinrichtung nach einem der Ansprüche 1 bis 8,
**dadurch gekennzeichnet, dass** der Kolben (36) mit einem Zwischenelement (35) in Verschieberichtung verbunden ist, das vorteilhaft gegenüber dem Kolben (36) begrenzt verschwenkbar ist und/oder drehfest auf der Schaltwelle (15) sitzt.

10. Steuereinrichtung nach Anspruch 9,
**dadurch gekennzeichnet, dass** das Zwischenelement (35) ein einarmiger Hebel und vorteilhaft in Verschieberichtung der Schaltwelle (15) relativ zum Stellelement (2) der zweiten Stelleinheit verschiebbar ist.

11. Steuereinrichtung nach Anspruch 9 oder 10,
**dadurch gekennzeichnet, dass** das Zwischenelement (35) und das Stellelement (2) in Drehrichtung der Schaltwelle (15) formschlüssig miteinander verbunden sind.

12. Steuereinrichtung nach einem der Ansprüche 1 bis 11,
**dadurch gekennzeichnet, dass** der Kolben (36) mit mindestens einem Magneten (48) versehen ist, dem ein Sensor (49) zur Erfassung des Verschiebeweges des Kolbens (36) zugeordnet ist.

13. Steuereinrichtung nach einem der Ansprüche 9 bis 12,
**dadurch gekennzeichnet, dass** das Stellelement (2) durch zwei Kolbeneinheiten (4, 5) verstellbar ist, die an einander gegenüberliegenden Seiten des Stellelementes (2) angreifen.

14. Steuereinrichtung nach einem der Ansprüche 9 bis 13,
**dadurch gekennzeichnet, dass** das Stellelement (2) mit einem Schenkel (13) drehbar auf der Schaltwelle (15) sitzt und sein Quersteg (14) vorzugsweise eine in Verschieberichtung der Schaltwelle (15) sich erstreckende Führung (33) für das Zwischenelement (35) aufweist.

15. Steuereinrichtung nach einem der Ansprüche 9 bis 14,
**dadurch gekennzeichnet, dass** das Stellelement (2) mit mindestens einem Magneten (19) versehen ist, dem ein Sensor (20) zur Erfassung des Schwenkweges des Stellelementes (2) zugeordnet ist.

16. Steuereinrichtung nach einem der Ansprüche 13 bis 15,
**dadurch gekennzeichnet, dass** die beiden Kolbeneinheiten (4, 5) jeweils zwei, vorzugsweise als Hülsen ausgebildete und aufeinander sitzende Kolben (21, 23) aufweisen, von denen vorteilhaft die inneren Kolben (23) am Stellelement (2) angreifen.

17. Steuereinrichtung nach einem der Ansprüche 13 bis 16,
**dadurch gekennzeichnet, dass** die Kolbeneinheiten (4, 5) über Druckmedium durch Schaltventile (8, 9) betätigbar sind.

18. Steuereinrichtung nach einem der Ansprüche 13 bis 17,
**dadurch gekennzeichnet, dass** die Kolbeneinheiten (4, 5) und die Hilfskolben (42 bis 45) rechtwinklig zueinander liegen.

19. Steuereinrichtung, insbesondere nach einem der Ansprüche 1 bis 18, mit einem die Stelleinheiten aufnehmenden Gehäuse,
**dadurch gekennzeichnet, dass** das Druckmedium in einem Tank (52) untergebracht ist, der sich in einer an das Gehäuse (1) anschließbaren Zusatzeinheit (89) befindet.

20. Steuereinrichtung nach Anspruch 19,
**dadurch gekennzeichnet, dass** das Gehäuse (1) Leitungsanschlüsse (90, 91) aufweist, in die Gegenanschlüsse (93, 94) der Zusatzeinheit (89) steckbar sind.

21. Steuereinrichtung nach Anspruch 20,
**dadurch gekennzeichnet, dass** die Gegenanschlüsse (93, 94) der Zusatzeinheit (89) durch jeweils ein Verschlusselement (95, 96), vorzugsweise ein Rückschlagventil, gesichert sind, die vorteilhaft beim Anschließen der Zusatzeinheit (89) selbsttätig in eine Freigabestellung verstellbar sind.

22. Steuereinrichtung, insbesondere nach einem der Ansprüche 1 bis 21,
**dadurch gekennzeichnet, dass** im Strömungsweg des Druckmediums vom Tank (52) zu wenigstens einer der beiden Stelleinheiten ein Kupplungsventil (101) liegt, mit dem ein Betätigungselement (104) für eine Kupplung (102) des Fahrzeuges betätigbar ist.

23. Steuereinrichtung nach Anspruch 22,
**dadurch gekennzeichnet, dass** das Betätigungselement (104) unter der Kraft wenigstens einer Druckfeder (113) steht, vorzugsweise unter der Kraft der Druckfeder (113) an einer Druckplatte der Kupplung (102) anliegt.

24. Steuereinrichtung nach Anspruch 23,
**dadurch gekennzeichnet, dass** die von der Druckplatte der Kupplung (102) auf das Betätigungselement (104) ausgeübte Kraft größer ist als die von der Druckfeder (113) in entgegengesetzter Richtung auf das Betätigungselement (104) ausgeübte Kraft.

25. Steuereinrichtung nach einem der Ansprüche 22 bis 24,
**dadurch gekennzeichnet, dass** das Betätigungselement (104) aus zwei ineinandergesetzten Teilen (108, 116) besteht, von denen das innere Teil (116) gegenüber dem äußeren Teil (108) begrenzt schwenkbar ist.

26. Steuereinrichtung nach einem der Ansprüche 22 bis 25,
**dadurch gekennzeichnet, dass** das vorteilhaft durch Beaufschlagung mit Druckmedium gegen die Kraft der Druckplatte der Kupplung (102) verschiebbare Betätigungselement (104) auf der Seite der Druckfeder (113) einen Druckraum (129) begrenzt, der über eine Leitung (131) mit dem Kupplungsventil (101) verbunden ist.

## Claims

1. Control device for automated manual transmissions of vehicles, preferably of motor vehicles, with two actuating units (2, 4, 5, 36), by means of which a gearshift lever shaft (15) of the manual transmission can be rotated and displaced in order to select the shift track and the gear, wherein the first actuating unit comprises a piston (36) for displacing the gearshift lever shaft (15), wherein at least two auxiliary pistons (42 to 45) are associated with the piston (36), by means of which auxiliary pistons the piston (36) can be displaced in either of two directions,
and wherein the piston (36) comprises two piston rods (38, 39) which extend in the direction of displacement and project from a base body (37) at mutually opposite sides, and
**characterised in that**
the piston (36) can be displaced relative to an actuating element (2), which is U-shaped and has two legs (12, 13), of the second actuating unit, by means of which element the gearshift lever shaft (15) can be moved for selecting the gear, wherein one of the legs (13) is rotatably mounted on the gearshift lever shaft (15).

2. Control device according to Claim 1,
**characterised in that** the piston rods (38, 39) comprise end faces (86, 87) on which pressure medium can act and which are of a size different to that of the end faces (82 to 85) of the auxiliary pistons (42 to 45) on which the pressure medium can act.

3. Control device according to Claim 1 or 2,
**characterised in that** the base body (37) of the piston (36) is block-shaped.

4. Control device according to any one of Claims 1 to 3,
**characterised in that** two auxiliary pistons (42 to 45), which preferably lie on both sides of the piston rods (38, 39), are in each case associated with the mutually opposite sides of the base body (37) of the piston (36).

5. Control device according to Claim 4,
**characterised in that** the end sides (82 to 85) of the
two auxiliary pistons (42, 45) on each side of the base body (37) of the piston (36) are smaller than the end faces (86, 87) of the piston rods (38, 39).

6. Control device according to Claim 4 or 5,
**characterised in that** the two auxiliary pistons (42 to 45) on each side of the base body (37) of the piston (36) have end faces (82 to 85) of different sizes, and that the auxiliary pistons (42, 44) with the smaller end face (82, 84) have a longer displacement path than the auxiliary pistons (43, 45) with the larger end face (83, 85).

7. Control device according to any one of Claims 1 to 6,
**characterised in that** stops (75, 76, 80, 81) in the displacement path are associated with the auxiliary pistons (42 to 45).

8. Control device according to any one of Claims 1 to 7,
**characterised in that** pressure chambers (65 to 70) accommodating the auxiliary pistons (42 to 45) and the piston rods (38, 39) are connected to shift valves (46, 47).

9. Control device according to any one of Claims 1 to 8,
**characterised in that** the piston (36) is connected to an intermediate element (35) in the direction of displacement, which element can advantageously be pivoted within limits with respect to the piston (36) and/or is mounted in a non-rotatable manner on the gearshift lever shaft (15).

10. Control device according to Claim 9,
**characterised in that** the intermediate element (35) is a one-armed lever and can advantageously be displaced in the direction of displacement of the gearshift lever shaft (15) relative to the actuating element (2) of the second actuating unit.

11. Control device according to Claim 9 or 10,
**characterised in that** the intermediate element (35) and the actuating element (2) are positive locked together in the direction of rotation of the gearshift lever shaft (15).

12. Control device according to any one of Claims 1 to 11,
**characterised in that** the piston (36) is provided with at least one magnet (48), with which a sensor (49) for detecting the displacement path of the piston (36) is associated.

13. Control device according to any one of Claims 9 to 12,
**characterised in that** the actuating element (2) can be moved by two piston units (4, 5) which act on mutually opposite sides of the actuating element (2).

14. Control device according to any one of Claims 9 to 13,
**characterised in that** the actuating element (2) is rotatably mounted on the gearshift lever shaft (15) by way of a leg (13), and its crosspiece (14) preferably comprises a guide (33), extending in the direction of displacement of the gearshift lever shaft (15), for the intermediate element (35).

15. Control device according to any one of Claims 9 to 14,
**characterised in that** the actuating element (2) is provided with at least one magnet (19), with which a sensor (20) for detecting the pivot travel of the actuating element (2) is associated.

16. Control device according to any one of Claims 13 to 15,
**characterised in that** the two piston units (4, 5) in each case comprise two pistons (21, 23) which preferably are formed as sleeves and are mounted on one another, the inner piston (23) of which advantageously acts on the actuating element (2).

17. Control device according to any one of Claims 13 to 16,
**characterised in that** the piston units (4, 5) can be operated via pressure medium through shift valves (8, 9).

18. Control device according to any one of Claims 13 to 17,
**characterised in that** the piston units (4, 5) and the auxiliary pistons (42 to 45) lie at a right angle to one another.

19. Control device, in particular according to any one of Claims 1 to 18, with a housing which accommodates the actuating units,
**characterised in that** the pressure medium is stored in a tank (52) which is located in an add-on unit (89) which can be connected to the housing (1).

20. Control device according to Claim 19,
**characterised in that** the housing (1) comprises line connections (90, 91) in which mating connections (93, 94) of the add-on unit (89) can be inserted.

21. Control device according to Claim 20,
**characterised in that** the mating connections (93, 94) of the add-on unit (89) are in each case secured by a closure element (95, 96), preferably a check valve, which can advantageously be moved into a release position when the add-on unit (89) is connected.

22. Control device, in particular according to any one of Claims 1 to 21,
**characterised in that** a clutch valve (101) lies in the flow path of the pressure medium from the tank (52) to at least one of the two actuating units, by means of which valve an operating element (104) for a clutch (102) of the vehicle can be operated.

23. Control device according to Claim 22,
**characterised in that** the operating element (104) is under the force of at least one compression spring (113), preferably lying against a pressure plate of the clutch (102) under the force of the compression spring (113)

24. Control device according to Claim 23,
**characterised in that** the force which is exerted on the operating element (104) by the pressure plate of the clutch (102) is greater than the force which is exerted on the operating element (104) by the compression spring (113) in the opposite direction.

25. Control device according to any one of Claims 22 to 24,
**characterised in that** the operating element (104) consists of two nested parts (108, 116), the inner part (116) of which can be pivoted within limits with respect to the outer part (108).

26. Control device according to any one of Claims 22 to 25,
**characterised in that** the operating element (104), which can advantageously be displaced through the action thereon of pressure medium against the force of the pressure plate of the clutch (102), defines a pressure chamber (129) on the side of the compression spring (113), which chamber is connected via a line (131) to the clutch valve (101).

## Revendications

1. Dispositif de commande pour boîte de vitesses automatisée de véhicules, de préférence de véhicules automobiles, comportant deux unités de réglage (2, 4, 5, 36) au moyen desquelles un arbre de changement de vitesse (15) de la boîte de vitesses peut être pivoté et coulissé en vue de la sélection du couloir de passage de rapport et de vitesse,
dans lequel la première unité de réglage destinée au coulissement de l'arbre de changement de vitesse (15) présente un piston (36),
dans lequel au moins deux pistons auxiliaires (42 à 45) sont associés au piston (36), ledit piston (36) pouvant coulisser au choix dans deux directions au moyen desdits pistons auxiliaires,
et dans lequel le piston (36) présente deux tiges de piston (38, 39) qui s'étendent dans le sens de coulissement et sont écartées du corps de base (37) au niveau des côtés opposés, et
**caractérisé en ce que** le piston (36) peut coulisser par rapport à un élément de réglage (2) de la seconde unité de réglage, ledit élément de réglage prenant une forme en U et présentant deux branches (12, 13), l'arbre de changement de vitesse (15) étant réglable pour la sélection de la vitesse au moyen de ladite seconde unité de réglage, une des branches (13) étant logée de manière pivotante sur l'arbre de changement de vitesse (15).

2. Dispositif de commande selon la revendication 1,
**caractérisé en ce que** les tiges de piston (38, 39) présentent des faces frontales (86, 87) alimentables en agent de pressurisation qui présentent une taille différente des faces frontales (82 à 85) des pistons auxiliaires (42 à 45) alimentables en agent de pressurisation.

3. Dispositif de commande selon la revendication 1 ou 2,
**caractérisé en ce que** le corps de base (37) du piston (36) prend une forme de bloc.

4. Dispositif de commande selon l'une quelconque des revendications 1 à 3,
**caractérisé en ce que** deux pistons auxiliaires (42 à 45) se trouvant de préférence de part et d'autre des tiges de piston (38, 39) sont associés respectivement aux côtés opposés du corps de base (37) du piston (36).

5. Dispositif de commande selon la revendication 4,
**caractérisé en ce que** les fronts (82 à 85) des deux pistons auxiliaires (42, 45) de chaque côté du corps de base (37) du piston (36) sont plus petits que les faces frontales (86, 87) des tiges de piston (38, 39).

6. Dispositif de commande selon la revendication 4 ou 5,
**caractérisé en ce que** les deux pistons auxiliaires (42 à 45) situés de chaque côté du corps de base (37) du piston (36) présentent des faces frontales (82 à 85) de différentes tailles et **en ce que** les pistons auxiliaires (42, 44) à plus petite face terminale (82, 84) présentent avantageusement une course de coulissement plus grande que les pistons auxiliaires (43, 45) à plus grande face terminale (83, 85).

7. Dispositif de commande selon l'une quelconque des revendications 1 à 6,
**caractérisé en ce que** des butées (75, 76, 80, 81) sont associées aux pistons auxiliaires (42 à 45) dans la course de coulissement.

8. Dispositif de commande selon l'une quelconque des revendications 1 à 7,
**caractérisé en ce que** des chambres de pression (65 à 70) recevant les pistons auxiliaires (42 à 45) et les tiges de piston (38, 39) sont raccordées aux soupapes de changement de vitesse (46, 47).

9. Dispositif de commande selon l'une quelconque des revendications 1 à 8,
**caractérisé en ce que** le piston (36) est relié à un élément intermédiaire (35) dans le sens de coulissement, ledit élément intermédiaire étant avantageusement limité dans son pivotement par rapport au piston (36) et/ou est logé de manière fixe en rotation sur l'arbre de changement de vitesse (15).

10. Dispositif de commande selon la revendication 9,
**caractérisé en ce que** l'élément intermédiaire (35) est un levier à bras unique et peut avantageusement coulisser dans le sens de coulissement de l'arbre de changement de vitesse (15) par rapport à l'élément de réglage (2) de la seconde unité de réglage.

11. Dispositif de commande selon la revendication 9 ou 10,
**caractérisé en ce que** l'élément intermédiaire (35) et l'élément de réglage (2) sont reliés par complémentarité de forme dans le sens de rotation de l'arbre de changement de vitesse (15).

12. Dispositif de commande selon l'une quelconque des revendications 1 à 11,
**caractérisé en ce que** le piston (36) est muni d'au moins un aimant (48) auquel est associé un capteur (49) destiné à l'acquisition de la course de coulissement du piston (36).

13. Dispositif de commande selon l'une quelconque des revendications 9 à 12,
**caractérisé en ce que** l'élément de réglage (2) peut être réglé grâce à deux unités de piston (4, 5) qui ont prise sur les côtés opposés de l'élément de réglage (2).

14. Dispositif de commande selon l'une quelconque des revendications 9 à 13,
**caractérisé en ce que** l'élément de réglage (2) est logé de façon pivotante avec une branche (13) sur l'arbre de changement de vitesse (15) et **en ce que** sa traverse (14) présente de préférence un guidage (33) pour l'élément intermédiaire (35) s'étendant dans le sens de coulissement de l'arbre de changement de vitesse (15).

15. Dispositif de commande selon l'une quelconque des revendications 9 à 14,
**caractérisé en ce que** l'élément de réglage (2) est muni d'au moins un aimant (19) auquel est associé un capteur (20) destiné à l'acquisition de la course de pivotement de l'élément de réglage (2).

16. Dispositif de commande selon l'une quelconque des revendications 13 à 15,
**caractérisé en ce que** les deux unités de piston (4, 5) présentent respectivement deux pistons (21, 23) prenant de préférence la forme de douilles et reposant l'un sur l'autre, pour lesquels les pistons intérieurs (23) ont avantageusement prise sur l'élément de réglage (2).

17. Dispositif de commande selon l'une quelconque des revendications 13 à 16,
**caractérisé en ce que** les unités de piston (4, 5) sont actionnables par des soupapes de changement de vitesse (8, 9) via l'agent de pressurisation.

18. Dispositif de commande selon l'une quelconque des revendications 13 à 17,
**caractérisé en ce que** les unités de piston (4, 5) et les pistons auxiliaires (42 à 45) sont perpendiculaires les uns par rapport aux autres.

19. Dispositif de commande, en particulier selon l'une quelconque des revendications 1 à 18, comportant un carter recevant les unités de réglage,
**caractérisé en ce que** l'agent de pressurisation est logé dans un réservoir (52) qui se trouve dans une unité additionnelle (89) raccordable au carter (1).

20. Dispositif de commande selon la revendication 19,
**caractérisé en ce que** le carter (1) présente des raccordements de conduite (90, 91) dans lesquels sont enfichables les contre-raccords (93, 94) de l'unité additionnelle (89).

21. Dispositif de commande selon la revendication 20,
**caractérisé en ce que** les contre raccords (93, 94) de l'unité additionnelle (89) sont bloqués respectivement par un élément de fermeture (95, 96), de préférence un clapet anti-retour, lesdits contre-raccords étant avantageusement réglables automatiquement dans une position de déblocage lors du raccordement de l'unité additionnelle (89).

22. Dispositif de commande, en particulier selon l'une quelconque des revendications 1 à 21,
**caractérisé en ce qu'**une valve d'embrayage (101) se trouve dans le trajet d'écoulement de l'agent de pressurisation depuis le réservoir (52) jusqu'à au moins une des deux unités de réglage, un élément d'actionnement (104) d'un embrayage (102) du véhicule pouvant être actionné au moyen de ladite valve d'embrayage.

23. Dispositif de commande selon la revendication 22,
**caractérisé en ce que** l'élément d'actionnement (104) est soumis à la force d'au moins un ressort de pression (113), ledit élément d'actionnement étant de préférence collé à un plateau de poussée de l'embrayage (102) sous la force du ressort de pression (113).

24. Dispositif de commande selon la revendication 23,
**caractérisé en ce que** la force exercée par le plateau de poussée de l'embrayage (102) sur l'élément d'actionnement (104) est supérieure à la force exercée par le ressort de pression (113) dans le sens opposé sur l'élément d'actionnement (104).

25. Dispositif de commande selon l'une quelconque des revendications 22 à 24,
**caractérisé en ce que** l'élément d'actionnement (104) se compose de deux parties (108, 116) mises l'une dans l'autre, dont la partie intérieure (116) peut être limitée dans son pivotement par rapport à la partie extérieure (108).

26. Dispositif de commande selon l'une quelconque des revendications 22 à 25,
**caractérisé en ce que** l'élément d'actionnement (104) coulissant avantageusement via l'alimentation en agent de pressurisation contre la force du plateau de poussée de l'embrayage (102) délimite une chambre de pression (129) sur le côté du ressort de pression (113), ladite chambre de pression étant reliée à la valve d'embrayage (101) via une conduite (131).
